# EUROPEAN PATENT SPECIFICATION

(11) **EP 2 517 439 B1**
(45) Date of publication and mention of the grant of the patent: **08.03.2017**
(21) Application number: 09805684.9
(22) Date of filing: 22.12.2009
(51) Int. Cl.: H04L 29/08

(54) **METHOD FOR COORDINATING THE PROVISION OF A COMPOSITE SERVICE**
VERFAHREN ZUR KOORDINATION DER LIEFERUNG EINES ZUSAMMENGESETZTEN DIENSTES
PROCÉDÉ DE COORDINATION DE LA DÉLIVRANCE D'UN SERVICE COMPOSÉ

(43) Date of publication of application: 31.10.2012
(73) Proprietor: Telefonaktiebolaget LM Ericsson (publ), 164 83 Stockholm (SE)
(72) Inventor: QUINET, Raphael, B-4000 Liège (BE); LEVENSHTEYN, Roman, 52062 Aachen (DE); FIKOURAS, Ioannis, 52062 Aachen (DE); FREITER, Eugen, 52078 Aachen (DE)
(74) Representative: Ericsson
(86) International application number: PCT/EP2009/009214
(87) International publication number: WO 2011/076232

(56) References cited:
- EP-A1- 1 879 358
- WO-A1-2006/018794
- WO-A1-2006/051181
- US-A1- 2007 050 446

## Description

### Technical field

The present invention relates to the field of service composition within telecommunication networks.

### Background

Currently the SIP (session initiation protocol) is one of the core technologies used by IMS (Internet Multimedia Subsystem). IMS (Internet Multimedia Subsystem) is a network architecture based on the internet protocol that provides common functions such as AAA (authentication, authorization, accounting) services, including charging services and access control services, and user profile services including services provided by a HSS (home subscriber server). Common functions means these functions are suitable to be used when providing voice communications and data communications in a uniform way i.e. avoiding the need to have separate mechanisms for these functions when applied to voice communications and different ones for the data communications.

The IMS architecture includes an entity termed SCIM (Service Capability Interaction Manager) in its architecture description the 3GPP (Third Generation Partnership Project) TS (Technical Specification) 23.002.

The role of the SCIM is that of a network entity providing composite services composed of component services, wherein the invocation of the composite services includes a combined execution of its component services.

In this regard, service composition refers to a technology, where end user services to be provided to user terminals, e.g. to personal computers, laptop computers, or mobile phones of a telecommunications network, are dynamically built by combining constituent services. The selection of the constituent services as components of the composite service may be performed just in time at user request. The needed constituent services are described in terms of required generic properties. Any service that provides the needed properties can be used as part of the composite service. Rather than using a fixed binding of a particular service to needed properties any suitable service within a pool of available services can be selected. The pool of available constituent services can change dynamically by adding new services or by removing them. A composite service can therefore consist of different constituent services at each invocation. Thus, the set of component services that are actually included into a composite service may not be static, but depending on runtime conditions. The constituent services do not need to be specifically designed for service composition. They can be integrated into a composite service, but they can also work as a single service. The process of selecting component services and binding them to compose a composite service is sometimes referred to as service composition.

As one non-limiting example for a composite service a location-based weather forecast will be described. A location based weather forecast is a service providing a mobile user with a weather forecast which depends on the location of a mobile device. The location based weather forecast service is composed of a location service, providing some kind of location data and a weather forecast service, providing a forecast or prediction of the local weather based on the on location data as input of the weather forecast service. In this example the location service and the weather forecast service are both component services, and the location based weather forecast is a composite service composed of component services. In this case the format of the location data, e.g. cell identifier, a location data identifier, a routing area identifier or similar, could be defined as the format of the data returned by the location service and inputted to the weather forecast service. The selection of the appropriate format of the location data would be typically part of the process of service composition.

A network architecture for providing composite services may include a service composition server for composing the actual component service instances, based on a description of the composite end user service. The description of the composite service may be in the form of requirements to the end user service, rather than a flow diagram of the actual processing steps required for executing the service. The service composition server typically has access to a component service database storing service descriptions of component services. Based on the description of the composite end user service, the service composition server selects appropriate component services and puts them in an appropriate succession of being invoked. Based on the service selection and order of being invoked the service composition server provides for an execution or invocation of the selected component services.

US 2007/0050446 A1 discloses a framework and tools for creating composite services from the array of services available as distributed, loosely structured, ad hoc, remote programming interfaces on the Internet. The framework includes metaservices for coordinating the execution of multiple services in a composite service, and also provides core services such as database management, security, financial transaction, media conversion, and so forth, to provide greater design latitude in the creation of new composite services from existing Internet content and services.

WO 2006/018794 A1 discloses a method for a UE to obtain location-based services (LBS). The method comprises the steps of obtaining the location information of the UE, judging whether the UE is in the area where LBS are pre-customized according to the location information and predefined area relationship information, establishing a radio link with an application server capable of providing the LBS if the UE is in the area and receiving the LBS from the application server over the radio link.

WO2006/051181 A1 discloses a method for the dynamic composition of communication services in a system, comprising identifiable, locatable hardware objects (O1, On) that include processing objects which each comprise an information acquisition component, an information reproduction component or a support component. Further the system also comprises a directory providing the location, identification and pre-defined characteristics of the aforementioned objects and indicating the basic service components of the processing objects. A physical match between objects is detected using at least the location information and the matched objects are identified. Subsequently, the characteristics of the objects identified are analysed, When the matched objects comprise first and second processing objects (O1, 02), at least one processing chain is determined as a function of at least the analysis of the characteristics, said chain combining selected service components comprising components of the first and second processing objects respectively, in order to form a corresponding service.

EP 1 879 358 A1 discloses the provisioning of services originating from a plurality of services through one central network element, which may be integrated in a gateway. The network element performs a method comprising the steps of combining pluralities of independent service elements to form respective service compositions, providing a plurality of service chaining applications, each of said service chaining applications being associated with one of said service compositions and defining a set of network and/or user events associated with actions for controlling the independent service elements of the corresponding service composition. Upon triggering of at least one service composition said method further comprises the steps of identifying and executing a corresponding service chaining application to manage instances of the independent service elements comprised in said service composition in accordance with current network and/or user events and managing said network resources and said network services in accordance with a totality of current instances of independent service elements.

In a typical network architecture for providing composite services the invocation of a component service by an application server is coordinated by a service execution coordination unit coordinating the invocation/ execution of component services. Several component service coordination units may be provided that may be grouped according to various criteria including a software or hardware platform that provides the component service, and/ or the different interfaces and/or protocols for controlling them. For instance, a component service implemented using a SIP servlet within a SIP container can be triggered and controlled through a specific set of APIs (Application Program Interfaces) (defined in JSR (Java Specification Request) 116 or JSR289) while component service implemented using a web service running on a remote host accessed via the Internet can be invoked though some specific protocols such as the SOAP (Simple Object Access Protocol) or the HyperText Transfer Protocol (HTTP).

A service execution coordination unit controlling the invocation and provision of the one or more component service instances and an application server implementing a component service may be separate nodes possibly implemented on different physical nodes.

In this type of network architecture, several sources of delay exist when invoking a composite service, such as delays associated with various requests for invoking a service and delays associated with reporting back service invocation results. Delays occur both between a service composition server and a service execution coordination unit and between a service execution coordination unit and an application server. This and other objects are therefore addressed by the present invention.

### Summary

According to one aspect this need is satisfied by a method for coordinating the execution of a composed service in a service execution coordination unit, which is a unit or a network node in a telecommunication system coordinating the execution of component services by application servers. The execution or invocation of a service is performed on request by a service composition server. A service composition server is a server node in a telecommunication system suitable for selecting component services and an order of executing or invoking component services suitable for executing a composite service when invoked in the specific order. A composite service, e.g. an end user service, is a service composed of at least a first and a second component service instances. The provided method comprises: receiving an instruction for invoking the first component service instance from the service composition server, receiving an instruction for invoking the second component service instance from the service composition server, contacting a respective one of the on or more application servers for invoking the first component service instance, and in response to receiving a service invocation result from invoking the first service automatically contacting the respective one of the of the one or more application servers for invoking the second of the one or more component service instances.

Typically the result from invoking the first component service instance would be used as input for invoking the second component service instance.

Automatically contacting the application server for invoking the second service in response to receiving a service invocation result from the first service may include contacting the respective application server without previously reporting the result of invoking the first component service instance back to the service composition instance.

However, when invoking the first service has resulted in a failure to meet a certain criterion or resulted in an error condition reported back to the service execution coordination unit, the failure to meet the certain criterion or the error may be reported back to the service composition server.

Alternatively or in addition, automatically contacting the application server for invoking the second service in response receiving the result from invoking the first service may include contacting the application server for invoking the second service without receiving a separate instruction for invoking the second component service instance.

In this case automatically contacting the application server for invoking the second service may include reporting back an intermediate result back to the service composition server without waiting for a response from reporting back the intermediate result.

The method provided in accordance with the teachings has several advantages: The requirements on a connection between the service execution coordination unit and the application server may be released, allowing a more distributed implementation of the application servers.

Also the service execution coordination unit may perform a scheduling of the invocation/ execution of component services that allows for an optimisation of resource usage and/ or a load balancing/ load distribution between the one or more application servers. Scheduling the execution of service components may include defining an order of execution and a prioritization of an execution of service components.

In an embodiment of the invention, the instruction for invoking the first component service instance and the instruction for invoking the second service instance are a combined instruction for invoking the first and the second component service instance.

The request for invoking the first component service instance may include or may be associated with a criterion or an assertion to be met by a result from invoking the first component service. As an example for an embodiment including a location service as first component service instance, the criterion or assertion may be that the location service reports a valid location parameter back to the service execution coordination unit.

In one example of a criterion or an assertion to be met by a result from invoking the first service, the criterion or assertion may include an error condition, e.g. a condition defining a certain type of result, which is expected from invoking the first service, as erroneous or not.

In a certain embodiment the request the request for invoking the first component service instance may not only include the criterion/ assertion to be met by the service invocation result, but also an instruction for responding to meeting the criterion and/or failing to meet the criterion. The criterion may be e.g. that the service invocation result, comprises a numeric value is within a predefined value range.

This instruction may e.g. be an instruction to report the result of invoking the first service back to the service composition server under certain conditions, or alternatively to refrain from reporting back a service invocation result if a certain condition is met.

For example the instruction may be to refrain from executing the second service if an error condition has been encountered, or alternatively the instruction may be to proceed with invoking the second component service, even if an error condition has been encountered, potentially using a default value as input for invoking the second component service instance, if no valid result from invoking the first component service instance is available. An error condition can be indicated by an error message received as a service invocation result, or alternatively the error condition may result from classifying a service invocation result as erroneous, based on some error criterion. One possible error criterion is e.g. that the service invocation result comprises a numeric value within a predefined value range.

By this additional communication between the service composition server and the service execution unit e.g. exchange of additional control information on error handling can be avoided or limited.

In one embodiment the request to invoke one of the first and second component services comprises alternatives for the component services, and the method comprises selecting a component service from the component service alternatives. Thus the service execution coordination unit may select an appropriate service either based on information available to the service execution coordination unit, such as actual consumption/ availability of processing resources within an application server, or the availability of a component service instance on an application server. The component service selection may also depend on a result from invoking another component service, such that among alternatives for the second component service instance a selection is performed that depends on the outcome or result of invoking the first component service instance.

According to an advantageous embodiment, the request to invoke the first component service instance and the request to invoke the second component service instance are one combined request to invoke a service set which includes the first and the second service. Herein the combined request may include an identifier of the component service set and this identifier and the set of component services may be cached within the service execution coordination unit. When a further request for invoking the set of component services, which includes the identifier, is received in the service execution coordination unit, the first and the second component service are retrieved based on the service set identifier and invoked. By this the amount of data communicated between the service composition server and the service execution unit can be further limited.

Herein the request to invoke the set of the first and the second service component may comprise an assertion to be met by a result of invoking the first and/or second component service, a dependency between the first and the second component service, or an initial parameter for invoking the first and/or second component service, and retrieving the set of component services includes retrieving the assertion, the dependency, and or the initial parameter. Also this provides for limiting the amount of data communicated between the service composition server and the service execution coordination unit.

According to one aspect, a service execution coordination unit is provided for coordinating the execution of a service on request by a service composition server. The service is composed of at least a first and a second component service instance. The service execution coordination unit comprises: a receiving unit for receiving an instruction for invoking the first component service instance from the service composition instance, and for receiving an instruction for invoking the second component service instance from the service composition instance. Also the service execution coordination unit comprises: a communication unit for contacting a respective one of the on or more application servers for invoking the first component service instance and for contacting a respective one of the one or more application servers for invoking the second component service instance. The service execution supervision unit further comprises a receiving unit for receiving a service invocation result from invoking the first service and a processing unit for - in response to receiving the invocation result from the first service - automatically initiating contacting the respective one of the of the one or more application servers for invoking the second of the one or more component service instances.

According to one embodiment, the service execution coordination unit may be collocated with at least one of the one or more application servers within one network node. According to this embodiment, the communication unit for contacting a respective application server and the receiving unit would be units internal to the network node, either as a hardware unit or as a software module.

Herein automatically contacting the respective one of the one or more application servers may embrace the aspects described above in relation to the method of coordinating the execution of a composite service.

Also the service execution coordination unit is susceptible to the same or similar modifications as the method of coordinating the execution of a composite service described above.

In another aspect, a method for composing a service by a service composition server in a service composition system is disclosed comprising at least one service execution coordination unit coordinating the execution of a composed services by one or more application servers. The composed services are composed of at least a first and a second component service instance, and the method comprises: sending an instruction for invoking the first component service instance towards a service execution coordination unit, and sending an instruction for invoking the second component service instance towards the service execution coordination unit, wherein the instruction is an instruction for automatically invoking the second component service in response to receiving a service invocation result from invoking the first service.

Herein automatically contacting the respective one of the one or more application servers may embrace the aspects described above in relation to the method of coordinating the execution of a composite service.

In one aspect, the method for composing a service includes composing the service from a plurality of component service instances for invocation by a plurality of service execution coordination units, wherein an order of invoking the component service instances is determined in view of subsequently invoking component services by a common service execution coordination unit. To that end component service instances may be grouped by service execution coordination units and the order of invoking component service instances is performed such that component service instances are subsequently invoked using the same component service execution coordination unit to the extent possible.

In a further detailed example the instruction for invoking the first component service instance and the instruction for invoking the second service instance are a combined instruction for invoking the first and the second component service instance.

In one modification, the request for invoking the first component service instance may include or be associated with a criterion to be met by a result from invoking the first component service.

Furthermore the request for invoking the first component service instance may include or be associated with an instruction for responding to meeting the criterion and/or failing to meet the criterion.

In another example the request to invoke one of the first and second component service includes an identifier of a set comprising the first and the second component service, and the request for invocation of the component service includes instructing the service execution coordination unit to cache the set of component services set and their identifier.

The advantages of those modifications/ examples have been described above in relation to the method in a component service execution coordination unit.

In one aspect, a service composition server is provided for a service composition system comprising at least one service execution coordination unit coordinating the execution of composed services by one or more application servers, wherein the composed service is composed of at least a first and a second component service instance. The service composition server comprises a sending unit for sending an instruction for invoking the first component service instance towards a service execution coordination unit, and for sending an instruction for invoking the second component service instance towards the service execution coordination unit, wherein the instruction is an instruction for automatically invoking the second component service in response to receiving a service invocation result from invoking the first service.

The thus provided service composition server is susceptible to the same or similar advantageous modifications as the method in a service composition server described above.

### Brief description of the drawings

Figure 1 is a block diagram depicting a network architecture useful for implementing the present invention.
Figure 2 is a flow chart diagram depicting a message flow in accordance with the teachings of the present invention.
Figure 3 is a block diagram depicting a suitable message format of a service invocation message useful for implementing the invention
Figure 4 is a block diagram depicting a service composition server in accordance with the teachings of the present invention.
Figure 5 is a block diagram depicting a service execution unit in accordance with the teachings of the present invention.

### Detailed description

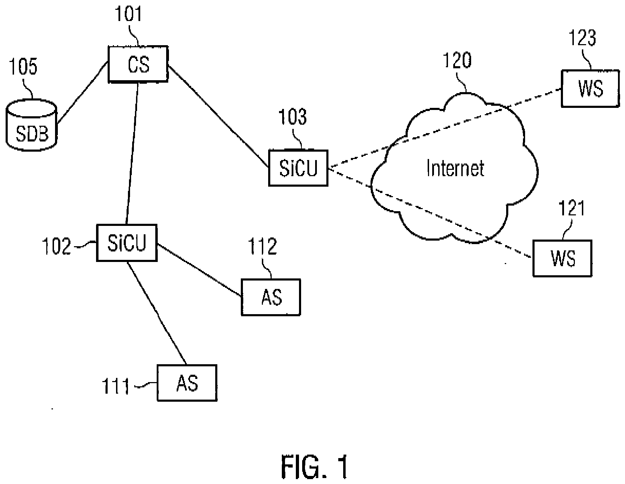

Figure 1 depicts a communication network 100 useful for implementing the present invention. The communication network 100 comprises a service composition server 101 for composing a service from component service instances on request by a user of the communication network (not depicted). A required end user service to be composed by the service composition server 101 may be described by requirements on the end user service. The service composition server has access to a service data base 105 storing descriptions of component services including e.g. input and output variables or similar parameters describing the properties of a component service. The service composition server 101 has at least two general tasks related to the execution of user services: The selection of the appropriate component services and a succession of invoking the component services, and also the actual invocation/ execution of the component service based on the determined succession of being invoked. In view of performing the latter tasks the service composition server 101 is connected to a plurality of service invocation coordination units 102 and 103, which have the task of invoking/executing component service instances by application servers on request by the service composition server 101. While determining a succession of invoking the services is generally a task of the service composition server, in accordance with the present invention, a certain degree of freedom in selecting an order of executing services may be given to the service invocation coordination units that may reorder some services, when being instructed to invoke a set of component services. In the depicted example the service invocation coordination unit 102 controls application servers 111 and 112 for invoking/ executing respective component service instances and the service invocation coordination unit 103 controls the web servers 123 and 121, being exemplary implementations of application servers addressable via an internet 120.

In one example the communication network 100 operates according to the IMS specification and at least some of the nodes are nodes operating in accordance with the IMS network architecture specification.

In a useful implementation the service invocation coordination units 102 and 103 are grouped, such that each of the service invocation coordination units implements a selected subset of control protocols for invoking the component services. As an example service invocation coordination unit 103 implements an IP (internet protocol) based control protocol such as a HTTP (HyperText Transfer Protocol) as control protocol to be used for invoking some component services.

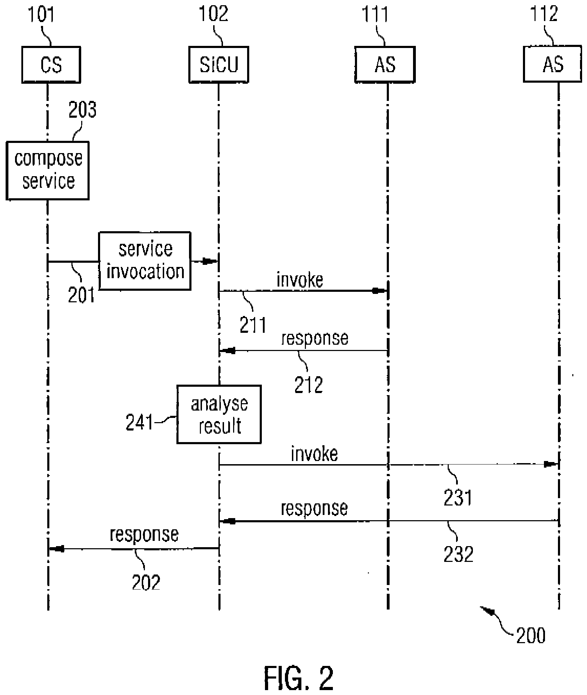

Figure 2 depicts a method of invoking a composed service 200 as a flowchart of processing steps and messages performed on or exchanged between some of the network components of figure 1. For conciseness a description of those network components is referred to rather than repeated.

The method of invoking a composite user service is preceded with a processing step 203 of determining the component service instances and their order of being invoked in the service composition server 101. In one non-limiting example the composite service may be a location- based weather forecast service described above. However a composite service could be any kind of network service, including an end-user service, which is composed of two or more component services.

Advantageously the succession of component service instances is determined such that component service invocations performed via a same service invocation coordination unit are grouped together such that they may be invoked in sequence via that same service invocation coordination unit. When the sequence of component service invocations has been determined the component services may be invoked via the appropriate service invocation coordination units. This may be done using separate requests to respective service invocation coordination units for invoking a single component service, or, preferably using combined requests for invoking a plurality of component services as instructed via a same service invocation coordination unit controlling the respective application servers on that the actual component services are executed. The combined request may be a request for invoking the plurality of component services in a given sequence or may allow the service invocation coordination unit to determine the order of executing the component services.

In the depicted example a service invocation request 201 includes an instruction to invoke a first component service on application server 111, and later a second component service on application server 112. In the context of a location based weather forecast service as example of the composite service, the first component service can be a location service and the second component service can be a weather forecast service. The service invocation request 201 may comprise parameters for invoking the first component service instance as well as parameters for invoking the second component service instance. Parameters for invoking a component service instance include parameters required for the service being invoked as well as descriptions of results expected from invoking a service. As an example, where a component service is a location service providing location data related to an identified user, a parameter required for invoking the service is some kind of identification of the user. In this case a required result from invoking the service would be some kind of identifier of the location, e.g. an identifier of a location area or radio cell in a radio telecommunication network or a geographical coordinate.

In the embodiment of a combined invocation of a plurality of component services, the service invocation request 201 may also comprise an instruction on how the result from invoking the first component service may be used as input parameter for the second component service. In the example of a location service as first component service, this may be an instruction on how to use location data returned from the first service as input for invoking the second component service, including an indication on which data format, e.g. which location data format to use, or an instruction whether or not the data returned form the first component service may require a reformatting, and, if yes, on how this reformatting may be performed. Reformatting may be necessary, if data returned from the first component service comprises the information required as input for the second component service, the second component service is however not capable of interpreting the data format returned by the first component service. As an example location data returned from the first component service is formatted as an identification of a location area, whereas the second component service requires some kind of coordinates as input. In this case a reformatting from location area identification into coordinates would be required and the service invocation request may comprise an instruction on how this reformatting should be performed, e.g. which algorithms to use, which coordinate system to use, where program code can be retrieved for executing the algorithm or similar information.

Herein the instruction to invoke the first and the second service could allow the service invocation coordination unit a certain degree of freedom for selecting the component services, such that the instruction would include a condition to be fulfilled by a result from invoking the service rather than being a instruction to invoke a specifically indicated service.

The descriptions of results expected from invoking a component service could also be a subset of parameters regularly returned from a component service, if only a subset of the regularly returned parameters is required in the current context. In this regard the subset may be regarded as an instruction to the service invocation coordination unit 102 instructing the service invocation coordination unit 102 to perform a filtering on the received service invocation results according to the specified subset of parameters.

In this regard the instruction on invoking the first and the second component service may comprise a first parameter subset of the results from invoking the first component service that should be returned to the service composition server. Another parameter subset in the instruction should be inputted to the second component service, when invoking the second component service, possibly after being reformatted as described above.

In one aspect the request for component service invocation of the first and second component service may comprise a constraint or condition which a result of invoking the first component service instance must fulfil to be regarded a valid result that is passed over to the second component service instance. Otherwise the result from invoking the first component service instance may be regarded as erroneous. In this regards the request for component service invocation may further comprise an instruction on handling a fulfilling or a failing to fulfil the constraint or condition specified. The instruction may be e.g. to refrain from invoking the second component service instance, when validity condition has not been fulfilled, or a service invocation result has been classified as erroneous. Alternatively the instruction may be to continue with invoking the second component service instance, however to use a default value as input for the second component service instance, instead of the result returned from the first component service instance, which has been classified as erroneous or invalid.

The service invocation method continues with sending a service invocation request 211 to the application server 111 to invoke executing a first component service instance using the application server 111. The application server executes the first component service instance and returns a service invocation result 212 back to the service invocation coordination unit 102. In response to receiving the service invocation result 211 the service invocation coordination unit 102 analyses the service invocation result in an analysing step 241. Analysing the service invocation result may include determining whether a validity or condition has been fulfilled or not according to the instruction from the service composition server. Also, analysing the service invocation result may include responding to the fulfilling the constraint or condition according to the instruction received from the service composition server 100 as described above.

The service invocation method continues with automatically invoking the second component service instance using the service invocation request 231 to the application server 112. Invoking the second component service instance may include passing a service invocation result from the first component service instance on to the second component service instance as input parameter. Passing the service invocation result from the first component service instance to the second component service instance may include passing a service invocation result without amendment, passing a subset of a set of service invocation results or reformatting the service invocation result from the first component service instance and passing the reformatted service invocation result over to the second component service instance.

The result from invoking the second component service instance is returned in a service invocation response 232 back to the service invocation coordination unit 102.

Finally the service invocation coordination unit analysis the service invocation result returned from the application server 112. Analysing the service invocation result may include a filtering of the response parameters according to some criteria, i.e. the specified parameter subset previously received in the service invocation request 201.

Finally the service invocation result obtained from the analysing step are returned to the service composition server 100 in a service invocation response message 202.

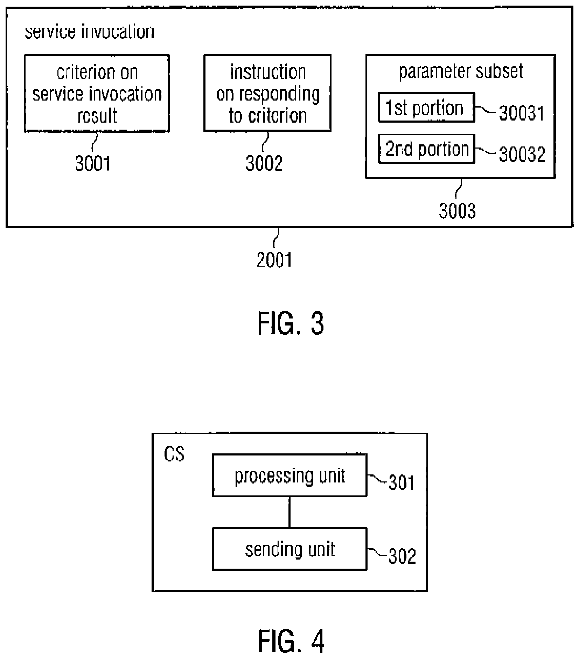

Figure 3 depicts a possible message format suitable for the service invocation message 201.

According to one aspect the service invocation request message 201 includes a criterion on a service invocation result 3001. The criterion a service invocation result 3001 may be a constraint or condition which a result of invoking the first component service instance must fulfil to be regarded a valid result that is passed over to the second component service instance. Otherwise the result from invoking the first component service instance may be regarded as erroneous.

In this regards the service invocation request message 201 may also comprise a an instruction for responding to the criterion 3002, which an instruction on handling a fulfilling or a failing to fulfil the constraint or condition specified. The instruction may be e.g. to refrain from invoking the second component service instance, when validity condition has not been fulfilled, or a service invocation result has been classified as erroneous. Alternatively the instruction may be to continue with invoking the second component service instance, however to use a default value as input for the second component service instance, instead of the result returned from the first component service instance, which has been classified as erroneous or invalid. In this case the default value may be either comprised in the instruction 3002 as well.

In addition the service invocation message 201 may also comprise a descriptions of results expected from invoking a component service including a parameter subset 3003, which is a subset of parameters regularly returned from a component service, if only a subset of the regularly returned parameters is required in the current context. In this regard the parameter subset 3003 may be regarded as an instruction to the service invocation coordination unit 102 instructing the service invocation coordination unit 102 to perform a filtering on the received service invocation results according to the specified subset of parameters. The parameter subset may comprise a first portion 30031 of parameters to be returned to the service composition server and a second portion 30032 of parameters to be inputted to another component service.

Figure 4 depicts a service composition server 100 for a service composition system 200 comprising at least one service execution coordination unit coordinating the execution of composed services by one or more application servers, wherein the composed service is a service which is composed of at least a first and a second component service instance.

The service composition server comprises a processing unit 301 for composing a set of component service instances and for determining an order of executing the component service instances for performing the composed service when invoked in the determined order.

The processing unit is connected to a sending unit 301 for sending an instruction for invoking the first component service instance towards a service execution coordination unit, and for sending an instruction for invoking the second component service instance towards the service execution coordination unit, wherein the instruction is an instruction for automatically invoking the second component service in response to receiving a service invocation result from invoking the first service.

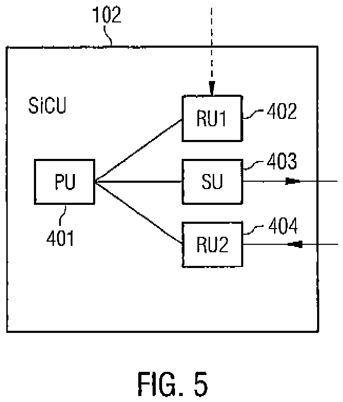

Figure 5 depicts a service execution coordination unit 102 for coordinating the execution of a service on request by a service composition server 100 (depicted in figure 4) the service being composed of at least a first and a second component service instance.

The service execution coordination unit comprises a receiving unit 402 for receiving an instruction for invoking the first component service instance from the service composition instance, and for receiving an instruction for invoking the second component service instance from the service composition instance. The receiving unit 402 is connected to a processing unit 401 for, in response to receiving the invocation result, from the first component service automatically initiating contacting the respective one of the of the one or more application servers for invoking the second of the one or more component service instances. The processing unit 401 is connected to a sending unit 403 for contacting a respective one of the on or more application servers for invoking the first component service instance and for contacting a respective one of the on or more application servers for invoking the second component service instance. The processing unit is further connected to a receiving unit 404 for receiving a service invocation result from invoking the first service.

## Claims

1. Method for coordinating the execution of a composed service in a service execution coordination unit (102, 103) on request by a service composition server (101), wherein the service execution coordination unit (102, 103) is remote from the service composition server (101), the service being composed in the service composition server (101) of at least a first and a second component service instance, the method comprising:
- receiving, by the service execution coordination unit (102, 103), an instruction for invoking the first component service instance from the service composition server (101),
- receiving, by the service execution coordination unit (102, 103), an instruction for invoking the second component service instance from the service composition server (101),
- contacting a respective one of one or more application servers (111, 112, 121, 123) for invoking the first component service instance, and
- in response to receiving a service invocation result from invoking the first component service instance automatically contacting respective one of one or more application servers (111, 112, 121, 123) for invoking the second component service instance.

2. Method according to claim 1, wherein the instruction for invoking the first component service instance and the instruction for invoking the second service instance are a combined instruction for invoking the first and the second component service instance.

3. Method according to any preceding claim, wherein the request for invoking the first component service instance includes or is associated with a criterion to be met by a result from invoking the first component service.

4. Method according to claim 3, wherein the request for invoking the first component service instance includes or is associated with an instruction for responding to meeting the criterion and/or failing to meet the criterion.

5. Method according to any of the preceding claims, wherein the request to invoke one of the first and second component services comprises alternatives for the component services, and the method comprises selecting a component service from the component service alternatives.

6. Method according to any of the preceding claims, wherein the request to invoke one of the first and second component service includes an identifier of a set comprising the first and the second component service, and wherein the method comprises caching the set of component services and their identifier, receiving a further request for invoking the set of component services, which includes the identifier, and retrieving the first and the second component service for being invoked based on the service set identifier.

7. Method according to the preceding claim, wherein the request to invoke one of the first and the second service component comprises at least one of an assertion to be met by a result of invoking the first and/or second component service, a dependency between the first and the second component service, or an initial parameter for invoking the first and/or second component service, and wherein retrieving the set of component services includes retrieving the assertion, the dependency, and or the initial parameter.

8. Method according to any preceding claim, comprising a filtering and/or transforming of the service invocation result received from invoking the first service and using the filtered or transformed service invocation result in the step of invoking the second component service instance.

9. Method according to any preceding claim, comprising an ordering and/or prioritisation of the services comprised in the set of the first and the second component service.

10. Service execution coordination unit (102, 103) for coordinating the execution of a service on request by a service composition server (101), wherein the service execution coordination unit (102, 103) is remote from the service composition server (101), the service being composed in the service composition server (101) of at least a first and a second component service instance, the coordination unit (102, 103) comprising:
- a receiving unit (402) for receiving an instruction for invoking the first component service instance from the service composition server (101), and for receiving an instruction for invoking the second component service instance from the service composition server (101),
- a communication unit (403) for contacting a respective one of one or more application servers (111, 112, 121, 123) for invoking the first component service instance and for contacting a respective one of one or more application servers (111, 112, 121, 123) for invoking the second component service instance,
- a receiving unit (404) for receiving a service invocation result from invoking the first component service instance, and
- a processing unit (401) for, in response to receiving the invocation result from the first component service instance, automatically initiating contacting the respective one of the one or more application servers (111, 112, 121, 123) for invoking the second component service instance.

11. Service execution coordination unit (102, 103) according to claim 10, being adapted to perform any of the methods of the claims 2 - 9.

12. Service composition server (101) for a service composition system, the service composition system comprises at least one service execution coordination unit (102, 103) coordinating the execution of composed services by one or more application servers (111, 112, 121, 123), wherein the service execution coordination unit (102, 103) is remote from the service composition server (101), the composed service being composed of at least a first and a second component service instance in a processing unit (301), and the service composition server (101) comprising:
- a sending unit (302) for sending an instruction for invoking the first component service instance towards a service execution coordination unit (102, 103), and for
- sending an instruction for invoking the second component service instance towards the service execution coordination unit (102, 103), wherein the instruction is an instruction for automatically invoking the second component service in response to receiving a service invocation result from invoking the first component service instance.

13. Service composition server (101) according to claim 12, being adapted to perform any of the methods of the claims 2 - 9.

## Patentansprüche

1. Verfahren zum Koordinieren der Ausführung eines zusammengesetzten Dienstes in einer Dienstausführungskoordinationseinheit (102, 103) auf Anforderung durch einen Dienstzusammensetzungsserver (101), wobei die Dienstausführungskoordinationseinheit (102, 103) vom Dienstzusammensetzungsserver (101) entfernt ist, der Dienst im Dienstzusammensetzungsserver (101) aus mindestens einer ersten und einer zweiten Teildienstinstanz zusammengesetzt wird, und das Verfahren umfasst:
- Empfangen durch die Dienstausführungskoordinationseinheit (102, 103) einer Anweisung zum Aufrufen der ersten Teildienstinstanz vom Dienstzusammensetzungsserver (101),
- Empfangen durch die Dienstausführungskoordinationseinheit (102, 103) einer Anweisung zum Aufrufen der zweiten Teildienstinstanz vom Dienstzusammensetzungsserver (101),
- Kontaktieren eines jeweiligen von einem oder mehreren Anwendungsservern (111, 112, 121, 123) zum Aufrufen der ersten Teildienstinstanz, und
- automatisches Kontaktieren eines jeweiligen von einem oder mehreren Anwendungsservern (111, 112, 121, 123) zum Aufrufen der zweiten Teildienstinstanz in Reaktion auf den Empfang eines Dienstaufrufergebnisses vom Aufrufen der ersten Teildienstinstanz.

2. Verfahren nach Anspruch 1, wobei es sich bei der Anweisung zum Aufrufen der ersten Teildienstinstanz und der Anweisung zum Aufrufen der zweiten Teildienstinstanz um eine kombinierte Anweisung zum Aufrufen der ersten und der zweiten Teildienstinstanz handelt.

3. Verfahren nach einem der vorhergehenden Ansprüche, wobei die Anforderung zum Aufrufen der ersten Teildienstinstanz ein Kriterium, das durch ein Ergebnis vom Aufrufen des ersten Teildienstes erfüllt werden soll, umfasst oder damit assoziiert ist.

4. Verfahren nach Anspruch 3, wobei die Anforderung zum Aufrufen der ersten Teildienstinstanz eine Anweisung zum Antworten auf die Erfüllung des Kriteriums und/oder Nichterfüllung des Kriteriums umfasst oder damit assoziiert ist.

5. Verfahren nach einem der vorhergehenden Ansprüche, wobei die Anforderung zum Aufrufen eines der ersten und zweiten Teildienste Alternativen für die Teildienste umfasst, und das Verfahren ein Auswählen eines Teildienstes aus den Teildienst-Alternativen umfasst.

6. Verfahren nach einem der vorhergehenden Ansprüche, wobei die Anforderung zum Aufrufen eines des ersten und zweiten Teildienstes eine Kennung eines Satzes umfasst, der den ersten und den zweiten Teildienst umfasst, und wobei das Verfahren ein Zwischenspeichern des Satzes von Teildiensten und ihrer Kennung, Empfangen einer weiteren Anforderung zum Aufrufen des Satzes von Teildiensten, welche die Kennung umfasst, und Abrufen des ersten und des zweiten Teildienstes basierend auf der Dienstsatzkennung umfasst, damit sie aufgerufen werden.

7. Verfahren nach einem der vorhergehenden Ansprüche, wobei die Anforderung zum Aufrufen eines des ersten und des zweiten Teildienstes mindestens eines von einer Aussage, die durch ein Ergebnis des Aufrufens des ersten und/oder zweiten Teildienstes erfüllt werden soll, einer Abhängigkeit zwischen dem ersten und dem zweiten Teildienst oder einem Ausgangsparameter zum Aufrufen des ersten und/oder zweiten Teildienstes umfasst, und wobei das Abrufen des Satzes von Teildiensten ein Abrufen der Aussage, der Abhängigkeit und/oder des Ausgangsparameters umfasst.

8. Verfahren nach einem der vorhergehenden Ansprüche, umfassend ein Filtern und/oder Transformieren des vom Aufrufen des ersten Dienstes empfangenen Dienstaufrufergebnisses und Verwenden des gefilterten und/oder transformierten Dienstaufrufergebnisses im Schritt des Aufrufens der zweiten Teildienstinstanz.

9. Verfahren nach einem der vorhergehenden Ansprüche, umfassend ein Reihen und/oder Priorisieren der Dienste, die im Satz des ersten und des zweiten Teildienstes enthalten sind.

10. Dienstausführungskoordinationseinheit (102, 103) zum Koordinieren der Ausführung eines Dienstes auf Anforderung durch einen Dienstzusammensetzungsserver (101), wobei die Dienstausführungskoordinationseinheit (102, 103) vom Dienstzusammensetzungsserver (101) entfernt ist, der Dienst im Dienstzusammensetzungsserver (101) aus mindestens einer ersten und einer zweiten Teildienstinstanz zusammengesetzt wird, und die Koordinationseinheit (102, 103) umfasst:
- eine Empfangseinheit (402) zum Empfangen einer Anweisung zum Aufrufen der ersten Teildienstinstanz vom Dienstzusammensetzungsserver (101) und zum Empfangen einer Anweisung zum Aufrufen der zweiten Teildienstinstanz vom Dienstzusammensetzungsserver (101),
- eine Kommunikationseinheit (403) zum Kontaktieren eines jeweiligen von einem oder mehreren Anwendungsservern (111, 112, 121, 123) zum Aufrufen der ersten Teildienstinstanz und zum Kontaktieren eines jeweiligen von einem oder mehreren Anwendungsservern (111, 112, 121, 123) zum Aufrufen der zweiten Teildienstinstanz,
- eine Empfangseinheit (404) zum Empfangen eines Dienstaufrufergebnisses vom Aufrufen der ersten Teildienstinstanz, und
- eine Verarbeitungseinheit (401) zum automatischen Initiieren des Kontaktierens des jeweiligen einer von dem einen oder den mehreren Anwendungsservern (111, 112, 121, 123) zum Aufrufen der zweiten Teildienstinstanz in Reaktion auf den Empfang eines Dienstaufrufergebnisses vom Aufrufen der ersten Teildienstinstanz.

11. Dienstausführungskoordinationseinheit (102, 103) nach Anspruch 10, die zum Durchführen eines der Verfahren nach Anspruch 2 bis 9 ausgelegt ist.

12. Dienstzusammensetzungsserver (101) für ein Dienstzusammensetzungssystem, wobei das Dienstzusammensetzungssystem mindestens eine Dienstausführungskoordinationseinheit (102, 103) umfasst, welche die Ausführung von zusammengesetzten Diensten durch einen oder mehrere Anwendungsserver (111, 112, 121, 123) koordiniert, wobei die Dienstausführungskoordinationseinheit (102, 103) vom Dienstzusammensetzungsserver (101) entfernt ist, der Dienst in einer Verarbeitungseinheit (301) aus mindestens einer ersten und einer zweiten Teildienstinstanz zusammengesetzt wird, und der Dienstzusammensetzungsserver (101) umfasst:
- eine Sendeeinheit (302) zum Senden einer Anweisung zum Aufrufen der ersten Teildienstinstanz an eine Dienstausführungskoordinationseinheit (102, 103) und zum
- Senden einer Anweisung zum Aufrufen der zweiten Teildienstinstanz an die Dienstausführungskoordinationseinheit (102, 103), wobei die Anweisung eine Anweisung zum automatischen Aufrufen des zweiten Teildienstes in Reaktion auf den Empfang eines Dienstaufrufergebnisses vom Aufrufen der ersten Teildienstinstanz ist.

13. Dienstzusammensetzungsserver (101) nach Anspruch 12, der zum Durchführen eines der Verfahren nach Anspruch 2 bis 9 ausgelegt ist.

## Revendications

1. Procédé de coordination de l'exécution d'un service composé dans une unité de coordination d'exécution de service (102, 103) à la demande d'un serveur de composition de service (101), dans lequel l'unité de coordination d'exécution de service (102, 103) est à distance du serveur de composition de service (101), le service étant composé dans le serveur de composition de service (101) d'au moins une première instance de service composant et une deuxième instance de service composant, le procédé comprenant :
- la réception, par l'unité de coordination d'exécution de service (102, 103), d'une instruction pour invoquer la première instance de service composant en provenance du serveur de composition de service (101),
- la réception, par l'unité de coordination d'exécution de service (102, 103), d'une instruction pour invoquer la deuxième instance de service composant en provenance du serveur de composition de service (101),
- le contact de l'un respectif d'un ou plusieurs serveurs d'application (111, 112, 121, 123) pour invoquer la première instance de service composant, et
- en réponse à la réception d'un résultat d'invocation de service découlant de l'invocation de la première instance de service composant, le contact automatique de l'un respectif d'un ou plusieurs serveurs d'application (111, 112, 121, 123) pour invoquer la deuxième instance de service composant.

2. Procédé selon la revendication 1, dans lequel l'instruction pour invoquer la première instance de service composant et l'instruction pour invoquer la deuxième instance de service composant constituent une instruction combinée pour invoquer la première instance de service composant et la deuxième instance de service composant.

3. Procédé selon l'une quelconque des revendications précédentes, dans lequel la demande d'invocation de la première instance de service composant comprend ou est associée à un critère à respecter par un résultat de l'invocation du premier service composant.

4. Procédé selon la revendication 3, dans lequel la demande d'invocation de la première instance de service composant comprend ou est associée à une instruction de réponse à la réussite du respect du critère et/ou l'échec du respect du critère.

5. Procédé selon l'une quelconque des revendications précédentes, dans lequel la demande d'invocation de l'un des premier et deuxième services composants comprend des alternatives aux services composants, et le procédé comprend la sélection d'un service composant parmi les alternatives de services composants.

6. Procédé selon l'une quelconque des revendications précédentes, dans lequel la demande d'invocation de l'un des premier et deuxième services composants comprend un identifiant d'un ensemble comprenant les premier et deuxième services composants, et dans lequel le procédé comprend la mise en mémoire cache de l'ensemble de services composants et de son identifiant, la réception d'une autre demande d'invocation de l'ensemble de services composants, qui comprend l'identifiant, et la récupération des premier et deuxième services composants à invoquer sur la base de l'identifiant d'ensemble de services.

7. Procédé selon l'une quelconque des revendications précédentes, dans lequel la demande d'invocation de l'un des premier et deuxième services composants comprend au moins l'un d'une assertion à respecter par un résultat de l'invocation des premier et/ou deuxième services composants, d'une dépendance entre les premier et deuxième services composants, ou d'un paramètre initial pour l'invocation des premier et/ou deuxième services composants, et dans lequel la récupération de l'ensemble de services composants comprend la récupération de l'assertion, de la dépendance ou du paramètre initial.

8. Procédé selon l'une quelconque des revendications précédentes, comprenant un filtrage et/ou une transformation du résultat d'invocation de service reçu à partir de l'invocation du premier service et l'utilisation du résultat d'invocation de service filtré ou transformé à l'étape de l'invocation de la deuxième instance de service composant.

9. Procédé selon l'une quelconque des revendications précédentes, comprenant un ordonnancement et/ou une priorisation des services compris dans l'ensemble des premier et deuxième services composants.

10. Unité de coordination d'exécution de service (102, 103) pour la coordination de l'exécution d'un service à la demande d'un serveur de composition de service (101), dans laquelle l'unité de coordination d'exécution de service (102, 103) est à distance du serveur de composition de service (101), le service étant composé dans le serveur de composition de service (101) d'au moins une première instance de service composant et une deuxième instance de service composant, l'unité de coordination (102, 103) comprenant :
- une unité de réception (402) pour la réception d'une instruction pour invoquer la première instance de service composant en provenance du serveur de composition de service (101), et pour la réception d'une instruction pour invoquer la deuxième instance de service composant en provenance du serveur de composition de service (101),
- une unité de communication (403) pour le contact de l'un respectif d'un ou plusieurs serveurs d'application (111, 112, 121, 123) pour invoquer la première instance de service composant, et le contact de l'un respectif d'un ou plusieurs serveurs d'application (111, 112, 121, 123) pour invoquer la deuxième instance de service composant,
- une unité de réception (404) pour la réception d'un résultat d'invocation de service découlant de l'invocation de la première instance de service composant, et
- une unité de traitement (401) pour, en réponse à la réception du résultat d'invocation en provenance de la première instance de service composant, le lancement automatique du contact de l'un respectif de l'un ou plusieurs serveurs d'application (111, 112, 121, 123) pour invoquer la deuxième instance de service composant.

11. Unité de coordination d'exécution de service (102, 103) selon la revendication 10, apte à effectuer l'un quelconque des procédés des revendications 2 à 9.

12. Serveur de composition de service (101) pour un système de composition de service, le système de composition de service comprenant au moins une unité de coordination d'exécution de service (102, 103) coordonnant l'exécution de services composés par un ou plusieurs serveurs d'application (111, 112, 121, 123), dans lequel l'unité de coordination d'exécution de service (102, 103) est à distance du serveur de composition de service (101), le service composé étant composé d'au moins une première instance de service composant et une deuxième instance de service composant dans une unité de traitement (301), et le serveur de composition de service (101) comprenant :
- une unité d'envoi (302) pour l'envoi d'une instruction pour invoquer la première instance de service composant à destination d'une unité de coordination d'exécution de service (102, 103), et pour
- l'envoi d'une instruction pour invoquer la deuxième instance de service composant à destination de l'unité de coordination d'exécution de service (102, 103), dans lequel l'instruction est une instruction pour invoquer automatiquement le deuxième service composant en réponse à la réception d'un résultat d'invocation de service découlant de l'invocation de la première instance de service composant.

13. Serveur de composition de service (101) selon la revendication 12, apte à effectuer l'un quelconque des procédés des revendications 2 à 9.
